# EUROPÄISCHE PATENTSCHRIFT

(11) **EP 0 649 503 B1**
(45) Veröffentlichungstag und Bekanntmachung des Hinweises auf die Patenterteilung: **08.07.1998**
(21) Anmeldenummer: 94912457.2
(22) Anmeldetag: 15.04.1994
(51) Int. Cl.: F16C 29/04, F16C 13/00

(54) **TRAGLAGER FÜR LINEAR GEFÜHRTE BEWEGUNGSEINHEITEN**
JOURNAL BEARING FOR LINEARLY GUIDED MOVING UNITS
PALIER D'APPUI POUR UNITES EN MOUVEMENT A GUIDAGE LINEAIRE

(30) Priorität: 04.05.1993 DE 4314658
(43) Veröffentlichungstag der Anmeldung: 26.04.1995
(73) Patentinhaber: ROBERT BOSCH GMBH, 70442 Stuttgart (DE)
(72) Erfinder: LUDWIG, Peter, D-72072 Tübingen (DE); KOBAN, Johannes, D-70178 Stuttgart (DE)
(86) Internationale Anmeldenummer: DE9400417
(87) Internationale Veröffentlichungsnummer: WO9425767

(56) Entgegenhaltungen:
- EP-A- 0 517 951
- DE-A- 3 329 151
- DE-U- 9 016 625
- US-A- 3 504 952
- US-A- 5 070 575

## Beschreibung

### Stand der Technik

Die Erfindung geht aus von einem Traglager für linear geführte Bewegungseinheiten nach der Gattung des Anspruchs 1. Bei Traglagern dieser Gattung, die insbesondere in modular aufgebauten Linearführungssystemen der industriellen Fertigung eingesetzt werden und selbst ein Baukastenmodul für ein solches, individuell konzipierbares System bilden, muß vor Inbetriebnahme der Bewegungseinheit außer dem radialen Führungsspiel der Laufrolle auch deren Axialspiel beseitigt werden, wenn die Mittel zur Führung der Bewegungseinheit auch nacht längerer Betriebszeit einwandfrei arbeiten sollen. Ein solches Lager ist z.B. aus der US-A-3 504 952 bekannt. Bei diesem Lager ist die Distanz zwischen zwei Gehäusehälften und damit das axiale Speil durch Stellschrauben, die mit Umfangsnuten in einem Exzenterbolzen zusammenwirken, festgelegt. Bei weiteren bekannten gattungs ähnlichen Traglagern ist das Gehäuse einteilig starr ausgeführt und zur Aufnahme der Laufrolle mit einer nach der einen Gehäuseseite hin offenen Ausnehmung versehen, deren beide quer zur Achse der Laufrolle stehenden Seitenwände einen nicht veränderbaren Abstand voneinander haben, der bedingt durch die unvermeidlichen Fertigungstoleranzen am Gehäuse und der Laufrolle im Regelfall ein Axialspiel der Laufrolle ergibt. Um dieses zu beseitigen, ist eine im Gehäuse geführte Schraube vcrgesehen, die an einer Keilfläche am Exzenterbolzen anliegt und über diese den Exzenterbolzen axial an eine feststehende Anschlagfläche andrückt. Trotz der so erzielten Festlegung des Exzenterbolzens ist nicht gewährleistet, daß auch die Axialposition der Laufrollen unverändert bleibt, weil sich diese beim Auftreten höherer Axialkräfte gegebenenfalls auch auf dem Exzenterbolzen verschieben kann.

### Vorteile der Erfindung

Die erfindungsgemäße Anordnung mit den kennzeichnenden Merkmalen des Anspruchs 1 hat den Vorteil, daß die Axialposition der Laufrolle über ihren Innenring unmittelbar festgelegt ist und der Exzenterbolzen eine axiale Spannfläche nicht benötigt. Die beiden Gehäusehälften können baugleich ausgeführt sein, wodurch die Fertigungsstückzahl erhöht und die Herstellung verbilligt wird. Die beiden Lagerzapfen am Exzenterbolzen können den gleichen Durchmesser haben, so daß gegebenenfalls auch eine Nachbearbeitung der Lagerbohrungen in baugleichen Gehäusehälften entfällt.

Die in den Unteransprüchen aufgeführten Merkmale stellen vorteilhafte Ausgestaltungen der Anordnung nach dem Anspruch 1 dar.

Bei einer bevorzugten Ausführungsform sind die Gehäusehälften durch die zum Befestigen des Traglagers am Grundkörper der Bewegungseinheit dienenden Schrauben zusammenspannbar und so gestaltet bzw. bemessen, daß sich mindestens an einer Gehäusehälfte der dem Innenring der Laufrolle gegenüberstehende Innenwandbereich beim Anziehen der Schrauben mit dem für die Endmontage vorgesehenen Drehmoment nach innen verformt. Dadurch wird die Axialposition der Laufrolle beim Befestigen des Traglagers am Grundkörper der Bewegungseinheit ohne zusätzliche Maßnahmen und Mittel selbsttätig festgelegt. Dabei kann die Anordnung vorteilhaft so getroffen sein, daß eine das Axialspiel aufhebende Verformung des Gehäuses erst eintritt, wenn die Befestigungsschrauben des Traglagers stärker angezogen werden, als es zum Festlegen des Traglagers am Grundkörper beim radialen Einstellen der Laufrollen und anschließenden Fixieren des Exzenterbolzens in der eingestellten Position notwendig ist. Das radiale Einstellen der Laufrolle erfolgt in diesem Fall in einem Vormontagevorgang, während das Axialspiel beim nachfolgenden Endmontagevorgang beseitigt wird.

Die in den Ansprüchen 3, 4 und 5 aufgeführten Merkmale ergeben eine fertigungsgerechte Ausführung eines aus zwei baugleichen Hälften bestehenden Traglagergehäuses.

Bei Traglagern mit mindestens einem gleichzeitig zur Schmierung dienenden Schmutzabstreifer aus Filz, welcher verschiebbar und federbelastet in einem Führungsschacht des Gehäuses gelagert ist, wird vorgeschlagen, daß der Schmutzabstreifer mit Randschulter versehen ist, die zusammenwirkend mit Gegenschultern am Gehäuse ein ungewolltes Heraustreten des Schmutzabstreifers aus dem Führungsschacht verhindern. Dadurch ist erreicht, daß bei der Lagerung bzw. beim Transport von Traglagern besondere Maßnahmen gegen das Herausfallen des Schmutzabstreifers entfallen.

Zum Erleichterten Ansetzen des Traglagers auf Grundkörper, die mit Nuten zur Aufnahme von Befestigungsmitteln, wie Hammermuttern, versehen sind, ist das Traglagergehäuse vorteilhaft an der Montagefläche mit Löchern zum Einstecken von zur Vorjustierung des Traglagers am Grundkörper dienenden, in die Nuten passend eingreifenden Führungselementen versehen.

### Zeichnung

Ein Ausführungsbeispiel der Erfindung ist in der Zeichnung dargestellt und in der nachfolgenden Beschreibung näher erläutert. Es zeigen:
- Figur 1 eine Linearführung mit einer als Laufwagen ausgebildeten Bewegungseinheit in Seitenansicht,
- Figur 2 ein Traglager der Bewegungseinheit in Richtung des Pfeiles A in Figur 1 gesehen,
- Figur 3 in vergrößertem Maßstab einen Schnitt durch die beiden lose aufeinandergesetzten Gehäusehälften des Traglagers nach der Linie III-III in Figur 2, und die
- Figuren 4 bis 6 ebenfalls vergrößert Schnitte durch das vormontierte, jedoch noch nicht angebaute Traglager nach den Linien IV-IV, V-V und VI-VI in Figur 2.

### Beschreibung des Ausführungsbeispiels

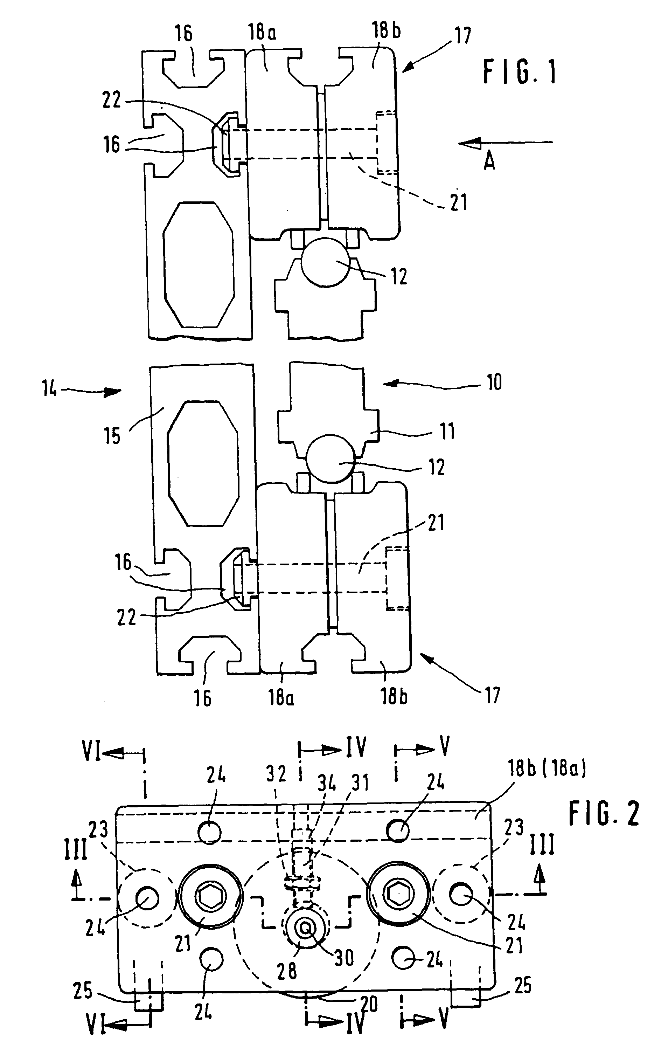

Die Linearführung hat eine feststehende Führungsschiene 10, die aus einem Strangpreßprofil 11 und zwei Laufschienen 12 aus Stahl besteht, welche am Strangpreßprofil 11 in geeigneter Weise befestigt sind. Die als Ganzes mit der Bezugszahl 14 bezeichnete, als Laufwagen ausgebildete Bewegungseinheit hat als Grundkörper eine durch ein Strangpreßprofil gebildete Tragplatte 15, die mit längslaufenden Nuten 16 zur Aufnahme von Montageelementen für weitere Bauelemente und Bauelementgruppen der Linearführung versehen ist. Auf der der Führungsschiene 10 zugekehrten Seite der Tragplatte 15 sind vier Traglager 17 befestigt, von denen in der Seitenansicht nach Figur 1 jeweils zwei deckungsgleich hintereinanderliegen. Die Traglager 17 sind als standardisierte Module eines Baukastensystems für Linearführungen ausgebildet, die für den Anbau an unterschiedliche, dem jeweiligen Anwendungszweck angepaßte Grundkörper von Bewegungseinheiten geeignet sind.

Jedes Traglager 17 hat ein aus zwei baugleichen Gehäusehälften 18a und 18b bestehendes Gehäuse, in welchem eine an der Führungsschiene 10 anliegende Laufrolle 20 drehbar gelagert ist. Jedes Traglager 17 ist an der Tragplatte 15 durch zwei Schrauben 21 und zwei in eine Nut 16 der Tragplatte 15 eingreifende Hammermuttern 22 befestigt, die auch die beiden Gehäusehälften 18a, 18b zusammenspannen. Zum erleichterten Aufschieben und Vorjustieren des Traglagers 17 auf die Tragplatte 15 ist die Gehäusehälfte 18a mit zwei Führungszapfen 23 aus elastischem Material versehen, die in Sacklöcher 24 in der Gehäusehälfte 18a eingesteckt sind und in die Einführungsöffnung der entsprechenden Nut 16 passend eingreifen. Jedes Traglager 17 ist ferner mit zwei aus Filz bestehenden Schmutzabstreifern 25 versehen, die in der nachstehend noch näher beschriebenen Weise im Gehäuse 18a, 18 b geführt und gegen die Führungsschiene 10 gedrückt sind (in Figur 1 sind die Schmutzabstreifer 25 nicht dargestellt).

Jede Laufrolle 20 hat ein Wälzlager 26, dessen Innenring 27 auf einem Exzenterbolzen 28 sitzt, der in korrespondierenden Lagerbohrungen 29 der beiden Gehäusehälften 18a, 18b drehbar gelagert ist. Über den Exzenterbolzen kann der Abstand der Laufrolle 20 zur Führungsschiene 10 eingestellt werden, wofür der Exzenterbolzen 28 an einer Stirnseite mit Angriffsflächen 30 für einen Steckschlüssel versehen ist. Zum Fixieren des Exzenterbolzens 28 in der eingestellten Lage dient eine Gewindestift 31, der in das Gewinde einer in der einen Gehäusehälfte 18a spiellos festgehaltenen Sechskantmutter 32 eingreift und im Bereich der Lagerbohrung 29 radial gegen den Exzenterbolzen 28 drückt. Der bedienungsseitige Endabschnitt 33 des Gewindestiftes 31 liegt in einer nach außen offenen Ausnehmung 34 der Gehäusehälfte 18a, wogegen die Sechskantmutter 32 in einer an der Innenseite der Gehäusehälfte 18a gebildeten Tasche passend aufgenommen ist.

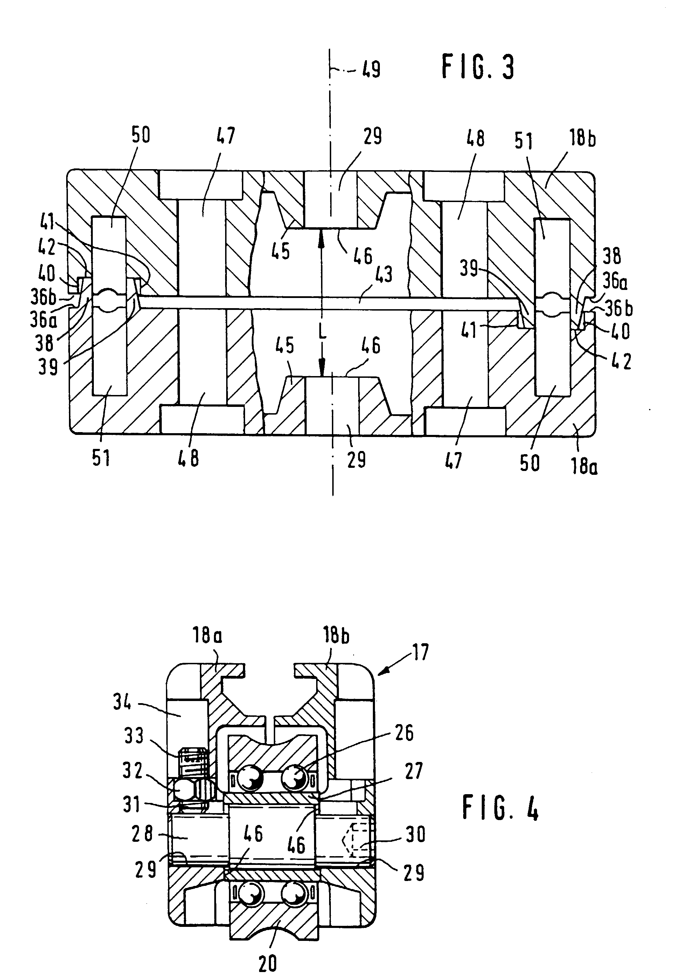

Die beiden baugleichen, spiegelbildlich aufeinandergesetzten Gehäusehälften 18a, 18b (Figur 3) sind so ausgebildet, daß sie nur an ihren schmäleren Seitenrändern 36a, 36b unmittelbar aufeinander aufliegen. Zu diesem Zweck ist jede Gehäusehälfte 18a, 18b an dem einen Seitenrand 36a mit zwei erhöhten Auflageleisten 38, 39 versehen, die passend und dadurch die Gehäusehälften 18a, 18b gegeneinander zentrierend zwischen Schultern 40, 41 greifen, die an dem anderen Seitenrand 36b am Übergang zu einem tieferliegenden Wandabschnitt 42 gebildet sind. Auf diese Weise ist ein Spalt 43 zwischen den beiden Gehäusehälften 18a, 18b vorhanden, der sich von einem Seitenrandpaar 36a, 36b, zum anderen Seitenrandpaar 36b, 36a erstreckt.

Die Lagerbohrungen 29 für den Exzenterbolzen 28 sind von kragenartigen Ansätzen 45 der Gehäusehälften 18a, 18b umgeben, deren einander zugekehrte Anschlagflächen 46 bei unverspannt aufeinander aufliegenden Gehäusehälften 18a, 18b einen Abstand L voneinander haben, welcher mindestens der Länge des Innenringes 27 der Laufrolle 20 plus einem zum Einstellen der radialen Lage der Laufrolle 20 benötigten geringen Bewegungsspiel entspricht. Für die Aufnahme und den Durchgang der Schrauben 21 haben die Gehäusehälften 18a, 18b abgestufte Bohrungen 47, 48, die zwischen den Seitenrändern 36a, 36b und der durch die Lagerbohrungen 29 gehenden Mittelebene 49 des Gehäuses 18a, 18b angeordnet sind.

Die Gehäusehälften 18a, 18b sind ferner mit Ausnehmungen 50, 51 versehen, die paarweise gegenüberliegend je einen Schacht zur Führung eines Schmutzabstreifers 25 bilden. Auf jeden Schmutzabstreifer 25 wirkt eine Druckfeder 52 ein, die sich über eine Kugel 53 am Gehäuse 18a, 18b abstützt und den Schmutzabstreifer 25 nach außen schiebt. Jeder Schmutzabstreifer 25 hat zwei Randschultern 54, 55, die im Zusammenwirken mit Gegenschultern 56, 57 am Gehäuse 18a, 18b den Verschiebeweg nach außen begrenzen.

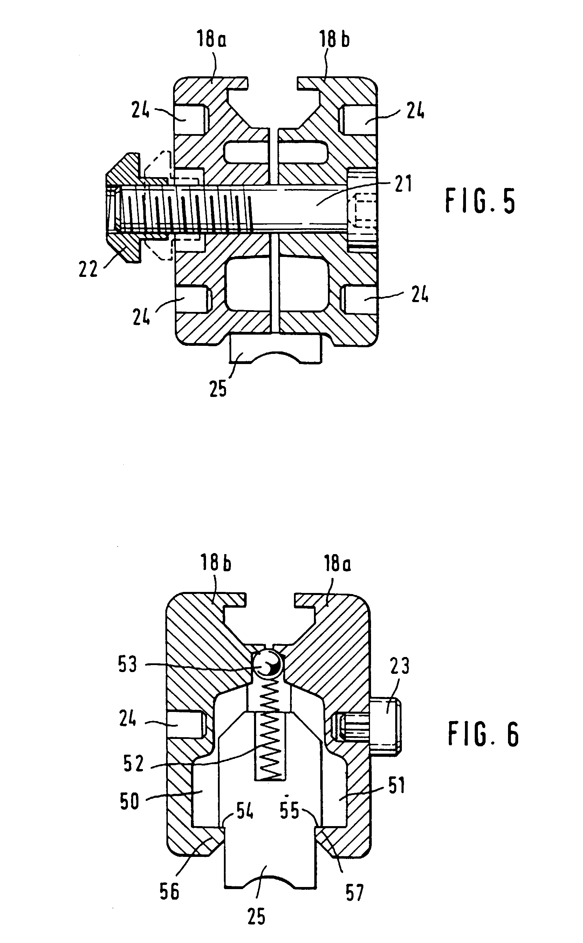

Die einzelnen Teile eines Traglagers 17 können zum Zweck der Lagerung und Anlieferung zum Ort der Endmontage durch die Schrauben 21 und die Hammermutter 22 lose zusammengehalten werden, wenn diese, wie in Figur 5 angedeutet, weit genug auf die Schrauben 21 aufgedreht werden.

Beim Zusammenbauen der Bewegungseinheit 14 und spiellosen Anpassen an die Führungsschiene 10 werden nach dem Ansetzen der Traglager 17 an die Tragplatte 15 die Schrauben 21 zunächst nur so stark angezogen, daß die Traglager 17 unverrückbar festgehalten sind, ein radiales Einstellen der Laufrollen 20 durch eine etwa bereits eingetretene Verformung der Gehäusehälfte 18b jedoch nicht behindert ist. Nach dem Fixieren des Exzenterbolzens 28 durch den Gewindestift 31 werden die Schrauben 21 mit dem für die Endmontage vorgeschriebenen vollen Drehmoment angezogen, wobei die Gehäusehälfte 18b, an den seitlichen Auflageleisten 38, 39 abgestützt, mit ihrem inneren Bereich nach innen verformt wird, bis sich ihre Anschlagfläche 46 am Innenring 27 anlegt bzw. mit vorgegebener Kraft anpreßt. Die Anordnung könnte auch so getroffen sein, daß sich dabei der die Anschlagfläche 46 tragende Ansatz 45 etwas verformt.

## Patentansprüche

1. Traglager (17) für linear geführte Bewegungseinheiten (14), mit einem durch Schrauben (21) an einem Grundkörper (15) der Bewegungseinheit (14) befestigbaren Gehäuse und mindestens einer ein Wälzlager (26) enthaltenden Laufrolle (20), deren Innenring (27) auf einem Exzenterbolzen (28) sitzt, der zum radialen Einstellen der Laufrolle (20) drehbar im Gehäuse gelagert und durch Spannmittel (31,32) in der eingestellten Lage fixierbar ist, und ferner mit Mitteln zum Beseitigen des Axialspiels bzw. zum Festlegen der Axialposition der Laufrolle im Gehäuse, wobei das Gehäuse des Traglagers (17) quer zur Achse der Laufrolle (20) in zwei mit je einer Lagerbohrung (29) für den bzw. die Exzenterbolzen (28) versehene Gehäusehälften (18a, 18b) geteilt ist, und die Axialposition der Laufrolle (20) durch Innenwandbereiche (46) der Gehäusehälften (18a, 18b) festgelegt ist , dadurch gekennzeichnet, daß zum Festlegen der Axialposition die Gehäusehälften (18a, 18b) nach dem radialen Einstellen der Laufrolle (20) durch Zusammenspannen der Gehäusehälften (18a, 18b) an die Stirnseiten des Innenringes (27) der Laufrolle (20) angelegt bzw. angepreßt sind.

2. Traglager nach Anspruch 1, dadurch gekennzeichnet, daß die beiden Gehäusehälften (18a, 18b) baugleich sind.

3. Traglager nach Anspruch 1 oder 2, dadurch gekennzeichnet, daß die Gehäusehälften (18a, 18b) durch die zum Befestigen des Traglagers (17) am Grundkörper (15) der Bewegungseinheit (14) dienenden Befestigungsschrauben (21) zusammenspannbar und so gestaltet bzw. bemessen sind, daß sich mindestens an einer Gehäusehälfte (18a, 18b) der dem Innenring (27) der Laufrolle (20) gegenüberstehende Innenwandbereich (46) beim Anziehen der Schrauben (21) mit dem für die Endmontage vorgesehenen Drehmoment nach innen verformt.

4. Traglager nach Anspruch 3, gekennzeichnet durch folgende Merkmale:
a) die beiden Gehäusehälften (18a, 18b) sind so gestaltet, daß sie nur an zwei gegenüberliegenden Seitenrändern (36a, 36b) unmittelbar aneinander anliegen,
b) die in den Gehäusehälften (18a, 18b) vorgesehenen Durchgangsbohrungen (47, 48) für die Befestigungsschrauben (21) sind zwischen den Lagerbohrungen (29) und den aneinander anliegenden Seitenrändern (36a, 36b) angeordnet,
c) an jeder Gehäusehälfte (18a, 18b) ist eine die innere Ausmündung der Lagerbohrung (29) umgebende Anschlagfläche (46) gebildet, deren gegenseitiger axialer Abstand (L) bei unverspannt aneinander anliegenden Gehäusehälften (18a, 18b) mindestens der Länge des Innenrings (27) der Laufrolle (20), plus einem ein Verdrehen des Exzenterbolzens (28) erlaubenden Bewegungsspiel entspricht.

5. Traglager nach Anspruch 4, dadurch gekennzeichnet, daß die die inneren Ausmündungen der Lagerbohrungen (29) umgebenden Anschlagflächen (46) an kragenartigen Ansätzen (45) der Gehäusehälften (18a, 18b) gebildet sind.

6. Traglager nach einem der vorhergehenden Ansprüche, dadurch gekennzeichnet, daß zum Fixieren des Exzenterbolzens (28) in der eingestellten Lage eine Spannschraube (31) vorgesehen ist, deren bedienungsseitiger Endabschnitt (33) in einer außenseitigen Ausnehmung (34) einer Gehäusehälfte (18a) liegt und die in einer Mutter (32) drehbar gelagert ist, welche in einer innenseitigen Ausnehmung der Gehäusehälfte (18a) gegen Verdrehen und axiales Verschieben gesichert gehalten ist.

7. Traglager nach einem der vorhergehenden Ansprüche, mit mindestens einem Schmutzabstreifer aus Filz, welcher verschiebbar und federbelastet in einem Führungsschacht des Gehäuses gelagert ist, dadurch gekennzeichnet, daß der Schmutzabstreifer (25) mit Randschultern (54, 55) versehen ist, die zusammenwirkend mit Gegenschultern (56, 57) am Gehäuse (18a, 18b) ein ungewolltes Heraustreten des Schmutzabstreifers (25) aus dem Führungsschacht (50, 51) verhindern.

8. Traglager nach einem der vorhergehenden Ansprüche, zum Befestigen an einem durch ein Strangpreßprofil gebildeten Grundkörper, der mit Längsnuten zur Aufnahme von Hammermuttern versehen ist, dadurch gekennzeichnet, daß das Gehäuse (18a, 18b) des Traglagers (17) an der Montagefläche mit Löchern (24) zum Einstecken von zur Justierung des Traglagers (17) am Grundkörper (15) dienenden, in die Nuten (16) passend eingreifenden Führungselementen (23) versehen ist.

## Claims

1. Supporting bearing (17) for linearly guided travelling units (14), having a housing which can be fastened on a basic body (15) of the travelling unit (14) by means of screws (21), and having at least one roller (20) which contains a rolling-contact bearing (26) and of which the inner raceway (27) is seated on an eccentric bolt (28) which is mounted rotatably in the housing for radial adjustment of the roller (20)and can be fixed in the adjusted position by clamping means (31, 32), and further having means for eliminating the axial play and/or for fixing the axial position of the roller in the housing, the housing of the supporting bearing (17) being divided, transversely with respect to the axis of the roller (20), into two housing halves (18a, 18b) which are each provided with a bearing bore (29) for the eccentric bolt or bolts (28), and the axial position of the roller (20) being fixed by inner wall regions (46) of the housing halves (18a, 18b), characterized in that, for the purpose of fixing the axial position, the housing halves (18a, 18b) are laid or pressed against the end sides of the inner raceway (27) of the roller (20) after radial adjustment of the roller (20), by clamping the housing halves (18a, 18b) together.

2. Supporting bearing according to Claim 1, characterized in that the two housing halves (18a, 18b) are of the same construction.

3. Supporting bearing according to Claim 1 or 2, characterized in that the housing halves (18a, 18b) can be clamped together by the fastening screws (21) serving to fasten the supporting bearing (17) on the basic body (15) of the travelling unit (14), and are configured and/or dimensioned such that, at least on one housing half (18a, 18b), the inner wall region (46) located opposite the inner raceway (27) of the roller (20) is deformed inwards upon tightening of the screws (21) by the torque prescribed for the final assembly.

4. Supporting bearing according to Claim 3, characterized by the following features:
a) the two housing halves (18a, 18b) are configured such that they butt directly against one another only on two opposite side borders (36a, 36b),
b) the through-passage bores (47, 48) which are provided in the housing halves (18a, 18b) and are intended for the fastening screws (21) are arranged between the bearing bores (29) and the abutting side borders (36a, 36b),
c) formed on each housing half (18a, 18b) is a stop surface (46) which surrounds the inner opening of the bearing bore (29) and of which the mutual axial spacing (L), when the housing halves (18a, 18b) are butting against one another in a non-braced state, corresponds at least to the length of the inner raceway (27) of the roller (20) plus an amount of play which permits rotation of the eccentric bolt (28).

5. Supporting bearing according to Claim 4, characterized in that the stop surfaces (46) which surround the inner openings of the bearing bores (29) are formed on collar-like extensions (45) of the housing halves (18a, 18b).

6. Supporting bearing according to one of the preceding claims, characterized in that in order to fix the eccentric bolt (28) in the adjusted position there is provided a bracing screw (31), of which the operatingside end portion (33) is located in an outer cutout (34) of one housing half (18a) and which is rotatably mounted in a nut (32) which is retained in an inner cutout of the housing half (18a) such that it is secured with respect to rotation and axial displacement.

7. Supporting bearing according to one of the preceding claims, having at least one dirt scraper which consists of felt and is mounted in a displaceable and spring-loaded manner in a guide shaft of the housing, characterized in that the dirt scraper (25) is provided with border shoulders (54, 55) which, interacting with mating shoulders (56, 57) on the housing (18a, 18b), prevent undesired escape of the dirt scraper (25) out of the guide shaft (50, 51).

8. Supporting bearing according to one of the preceding claims, for fastening on a basic body which is formed by an extruded profile and is provided with longitudinal grooves for receiving hammer nuts, characterized in that the housing (18a, 18b) of the supporting bearing (17) is provided, on the assembly surface, with holes (24) for plugging in guide elements (23) which serve to adjust the supporting bearing (17) on the basic body (15) and fit into the grooves (16).

## Revendications

1. Palier d'appui (17) pour une unité en mouvement (14), à guidage linéaire, avec un boîtier qui peut être fixé par des vis (21) sur un corps de base (15) de l'unité en mouvement (14) et avec au moins un galet de roulement (20)contenant un roulement à rouleaux (26), galet de roulement (20) dont la bague intérieure (27) repose sur un boulon d'excentrique (28) monté de façon à pouvoir tourner dans le boîtier pour le réglage radial du galet de roulement (20), et qui peut être fixé par des moyens de serrage (31,32) dans la position réglée, avec en outre des moyens pour éliminer le jeu axial ou pour bloquer la position axiale du galet de roulement dans le boîtier, le boîtier du palier d'appui (17) étant partagé, perpendiculairement à l'axe du galet de roulement (20), en deux moitiés de palier (18a, 18b) pourvues chacune d'un alésage de roulement (29) pour le ou les boulons d'excentrique (28), et la position axiale du galet de roulement (20) étant fixée à travers les zones des parois intérieures (46) des moitiés (18a, 18b) du boîtier,
caractérisé en ce que
pour fixer la position axiale, on applique ou on presse les moitiés (18a, 18b) du boîtier après le réglage radial du galet de roulement (20) en serrant ensemble les moitiés (18a, 18b) du boîtier sur les faces frontales de la bague intérieure (27) du galet de roulement (20).

2. Palier d'appui selon la revendication 1,
caractérisé en ce que
les deux moitiés (18a, 18b) du boîtier ont une construction identique.

3. Palier d'appui selon la revendication 1,
caractérisé en ce que
les deux moitiés (18a, 18b) du boîtier peuvent être serrées ensemble par les vis de fixation (21) qui servent à fixer le palier d'appui (17) sur le corps de base (15) de l'unité en mouvement (14) et ont une forme ou des dimensions telles que la zone des parois intérieures (46) qui se trouve en regard de la bague intérieure (27) du galet de roulement (20) se déforme vers l'intérieur au moins sur une moitié (18a, 18b) du boîtier en vissant les vis (21) avec le couple de torsion prévu pour le montage final.

4. Palier d'appui selon la revendication 3,
caractérisé en ce que
a) les deux moitiés du boîtier (18a, 18b) ont une forme telle qu'elles ne reposent directement l'une sur l'autre que sur deux bords latéraux opposés (36a, 36b),
b) les alésages de passage (47, 48) prévus dans les moitiés (18a, 18b) du boîtier pour les vis de fixation (21), sont disposés entre les alésages de roulement (29) et les bords latéraux (36a, 36b) qui reposent l'un sur l'autre,
c) sur chaque moitié (18a, 18b) du boîtier on forme une surface de butée (46) qui entoure l'embouchure intérieure de l'alésage de roulement (29), surface de butée dont la distance axiale mutuelle (L) correspond, quand les moitiés (18a, 18b) du boîtier reposent l'une sur l'autre sans être serrées, au moins à la longueur de la bague intérieure (27) du galet de roulement (20), plus un jeu permettant une rotation du boulon d'excentrique (28).

5. Palier d'appui selon la revendication 4,
caractérisé en ce que
les surfaces de butée (46) qui entourent les embouchures intérieures des alésages de roulement (29), sont formées
sur des appendices (45) en forme de collerette des moitiés (18a, 18b) du boîtier.

6. Palier d'appui, selon l'une des revendications précédentes,
caractérisé en ce que
pour fixer le boulon d'excentrique (28) dans sa position réglée il est prévu une vis de serrage (31) dont la section terminale(33) située du côté du maniement, se trouve dans un évidement (34), situé du côté extérieur, d'une moitié (18a) du boîtier, et qui est montée de façon à pouvoir tourner dans un écrou maintenu dans un évidement, situé du côté intérieur, de la moitié (18a) du boîtier sans pouvoir tourner ni se déplacer axialement.

7. Palier d'appui, selon l'une des revendications précédentes, avec au moins un racloir de salissures en feutre, qui est monté de façon à pouvoir coulisser et est comprimé par un ressort dans un puits de guidage du boîtier,
caractérisé en ce que
le racloir de salissures (25) est pourvu d'épaulements de bordure (54, 55) qui empêchent une sortie involontaire du racloir de salissures (25) du puits de guidage (50, 51), en coopérant avec des épaulements opposés (56, 57) sur le boîtier (18a, 18b).

8. Palier d'appui, selon l'une des revendications précédentes, à fixer sur un corps de base formé par un profilé, corps de base qui est pourvu de rainures longitudinales pour recevoir des écrous carrés à coins abattus,
caractérisé en ce que
le boîtier (18a, 18b) du palier d'appui (17) est pourvu, sur sa surface de montage, de trous (24) qui servent à enfoncer des éléments de guidage (23) qui viennent en prise de façon ajustée dans les rainures (16), et qui servent à ajuster le palier d'appui (17) sur le corps de base (15).
